# EUROPEAN PATENT APPLICATION

(11) **EP 2 413 049 A2**
(43) Date of publication of application: **01.02.2012**
(21) Application number: 11158067.6
(22) Date of filing: 14.03.2011
(51) Int. Cl.: F24F 3/147, F24F 12/00, B01D 53/26

(54) **Desiccant air-conditioning system**

(30) Priority: 27.07.2010 JP 2010168532
(71) Applicant: Mitsubishi Heavy Industries, Tokyo 108-8215 (JP)
(72) Inventor: Togano, Yoshie, Tokyo (JP); Ueda, Kenji, Tokyo (JP)
(74) Representative: Intès, Didier Gérard André

(57) **Abstract**

To reduce energy consumption, a desiccant air-conditioning system is provided with: an air supply channel 1 that supplies outside air A1 that flows from the outside, to an object to be air-conditioned; an exhaust channel 2 that exhausts return air A2 that flows from the object to be air-conditioned, to the outside; a desiccant portion 10 that adsorbs moisture from the outside air A1 passing through the air supply channel 1, and that desorbs the adsorbed moisture to the return air A2 passing through the exhaust channel 2; a first cooling portion 31 which is installed between the desiccant portion 10 and the object to be air-conditioned in the air supply channel, and which cools the outside air A1; a second cooling portion 44 which is installed between the desiccant portion 10 and the first cooling portion 31 in the air supply channel, and which absorbs the heat from the outside air A1 to cool it; a heating portion 45 which is installed between the desiccant portion 10 and the object to be air-conditioned in the exhaust channel 2, and which heats the return air A2 up to at least the regeneration temperature at which the desiccant portion 10 desorbs the moisture; and a heat supplying portion 50 that supplies the heat absorbed from the outside air A1 by the second cooling portion 44, to the heating portion 45.

## Description

### Field of the Invention

The present invention relates to a desiccant air-conditioning system.
Priority is claimed on Japanese Patent Application No. 2010-168532, filed July 27, 2010, the content of which is incorporated herein by reference.

### Description of Related Art

As is widely known, the air-conditioning load of a building comprises a sensible heat load and a latent heat load. Roughly, in the air-conditioning load, the ratio of the sensible heat load to the latent heat load is approximately 8:2. Consequently, in an attempt toremove the air-conditioning load by heat exchange between the air in the building and a heat transfer medium, the temperature of the heat transfer medium must be further lowered by the amount of the latent heat load, which increases the energy consumption. Therefore, in recent years, desiccant air-conditioning systems, in which the latent heat load is removed after the sensible heat load is removed with a desiccant (hygroscopic material), has been widely used as described in the Patent Document 1.

One of the desiccant systems includes, : an air supply channel that supplies outside air flowing from the outside to the inside of a building; an exhaust channel that exhausts return air flowing from the inside of the building to the outside; a desiccant portion that adsorbs moisture from the outside air passing through the air supply channel and desorbs the adsorbed moisture to the return air passing through the exhaust channel; a cooling portion, which is placed between the desiccant portion and an object to be air-conditioned, in the air supply channel, and cools the outside air; and a heating portion that heats the return air up to a regeneration temperature at which the desiccant portion desorbs the moisture.

### [Prior Art Document]

### [Patent Document]

[Patent Document 1] Japanese Unexamined Patent Application, First Publication No. 2006-189189

### SUMMARY OF INVENTION

### [Problems to be Solved by the Invention]

In the conventional technique, the outside air is cooled in the cooling portion that supplies the air, and afterwards the return air is heated up to the regeneration temperature of the desiccant portion. Therefore cooling and heating of the flowing air are needed, energy being spent doubly, which is inefficient.

The present invention has been made in consideration of the above circumstances, with an object of reducing the energy consumption of a desiccant air-conditioning system.

### [Means for Solving the Problem]

In order to achieve the above-described object, the present invention adopts the following means.
That is, a desiccant air-conditioning system according to the first aspect of the present invention includes: an air supply channel that supplies outside air that flows from the outside, to an object to be air-conditioned; an exhaust channel that exhausts return air that flows from the object to be air-conditioned, to the outside; a desiccant portion that adsorbs moisture from the outside air passing through the air supply channel, and that desorbs the adsorbed moisture to the return air passing through the exhaust channel; a first cooling portion which is installed between the desiccant portion and the object to be air-conditioned in the air supply channel, and which cools the outside air; a second cooling portion which is installed between the desiccant portion and the first cooling portion in the air supply channel, and which absorbs the heat from the outside air to cool it; a heating portion which is installed between the desiccant portion and the object to be air-conditioned in the exhaust channel, and which heats the return air up to at least the regeneration temperature at which the desiccant portion desorbs the moisture; and a heat supplying portion that supplies the heat absorbed from the outside air by the second cooling portion, to the heating portion.
According to this configuration, since the second cooling portion has a heat supplying portion that supplies heat absorbed from the outside air to the heating portion, the heat from the outside air passing through the air supply channel is transferred to the return air passing through the exhaust channel. This reduces the amount of heat (specific enthalpy difference) handled by the first cooling portion, energy used by the first cooling portion can be reduced, and thus energy consumption can be reduced. In addition, since the heat is supplied from the second cooling portion to the heating portion, energy required for heating can be reduced, compared to using a high-temperature heat source such as a boiler or the like.
Thus, it is possible to reduce the energy consumption of the overall air-conditioning system.

The desiccant air-conditioning system according to the first aspect of the present invention may further includes, a sensible heat exchange portion that exchanges heat between the outside air in the air supply channel between the desiccant portion and the second cooling portion, and the return air in the exhaust channel between the heating portion and the object to be air-conditioned.
According to this configuration, since it is provided with the sensible heat exchange portion that exchanges heat between the outside air and the return air, heat exchange is performed in advance by the heat supplying portion, before heat is transferred from the outside air to the return air. Because of this, the amount of heat to be transferred by the heat supplying portion can be reduced, energy used for the heat supplying portion can be reduced, so that the energy consumption can be further reduced.

The desiccant air-conditioning system according to the first aspect of the present invention may further includes, a control portion that increases and decreases the amount of heat supplied to the heating portion in proportion to the latent heat load of the object to be air-conditioned.
According to this configuration, since the amount of heat supplied to the heating portion is increased and decreased in proportion to the latent heat load, excessive heat supply with respect to the latent heat load can be prevented, and energy used for the heat supplying portion can be reduced. As a result, the energy consumption can be further reduced.

In the desiccant air-conditioning system according to the first aspect of the present invention may further includes, the second cooling portion may increase and decrease the amount of heat absorbed from the outside air according to the amount of heat to be supplied, and the control portion may cool the outside air in the first cooling portion such that the outside air to be supplied to the object to be air-conditioned reaches a target supply air temperature.
According to this configuration, since the outside air is cooled by the first cooling portion to adjust the temperature of the supply air to the target supply air temperature, energy used for the second cooling portion can be reduced appropriately in accordance with the amount of heat supplied to the heating portion, and the temperature of the outside air can be adjusted to the target supply air temperature securely.

In the desiccant air-conditioning system according to the first aspect of the present invention, the heat supplying portion may further comprises: a high-temperature heat transfer medium circuit, which is connected to the heating portion, and through which a high-temperature heat transfer medium that has a relatively high temperature circulates; a low-temperature heat transfer medium circuit, which is connected to the second cooling portion, and through which a low-temperature heat transfer medium that has a relatively low temperature circulates; and a heat pump that moves the heat of the low-temperature heat transfer medium to the high-temperature heat transfer medium.
According to this configuration, it is possible to provide a desiccant air-conditioning system with a relatively simple system configuration.

The desiccant air-conditioning system according to the first aspect of the present invention may further includes: a pre-cooling portion that cools the outside air, which is installed between the desiccant portion and the outside in the air supply channel; a header that connects the pre-cooling portion and the first cooling portion; and a centrifugal chiller that can supply chilled water to at least one of the pre-cooling portion and the first cooling portion.

### [Effects of the Invention]

According to the desiccant air-conditioning system of the present invention, it is possible to reduce energy consumption.

### BRIEF DESCRIPTION OF THE DRAWINGS

FIG. 1 is a schematic structural diagram of a desiccant air-conditioning system S 1 according to a first embodiment of the present invention.
FIG. 2 is a psychrometric chart showing the change in state of air in the desiccant air-conditioning system S 1 according to the first embodiment of the present invention.
FIG. 3 is a schematic structural diagram of a desiccant air-conditioning system C, which is a comparative example of the desiccant air-conditioning system S 1. The numbers with parentheses correspond to spaces in channels as explained in Fig. 1.
FIG. 4 is a psychrometric chart showing the change in state of air in the desiccant air-conditioning system C, which is a comparative example of the desiccant air-conditioning system S1. Symbols with numbers corresponding to spaces in channels are shown as explained in the Fig. 2.
FIG. 5 is a schematic structural diagram showing a desiccant air-conditioning system S2 according to a second embodiment of the present invention. The numbers with parentheses correspond to spaces in channels as explained in Fig. 1.
FIG. 6 is a diagram for explaining the operation of the desiccant air-conditioning system S2 according to the second embodiment of the present invention.

### BEST MODE FOR CARRYING OUT THE INVENTION

Hereunder is a description of embodiments of the present invention, with reference to the drawings.

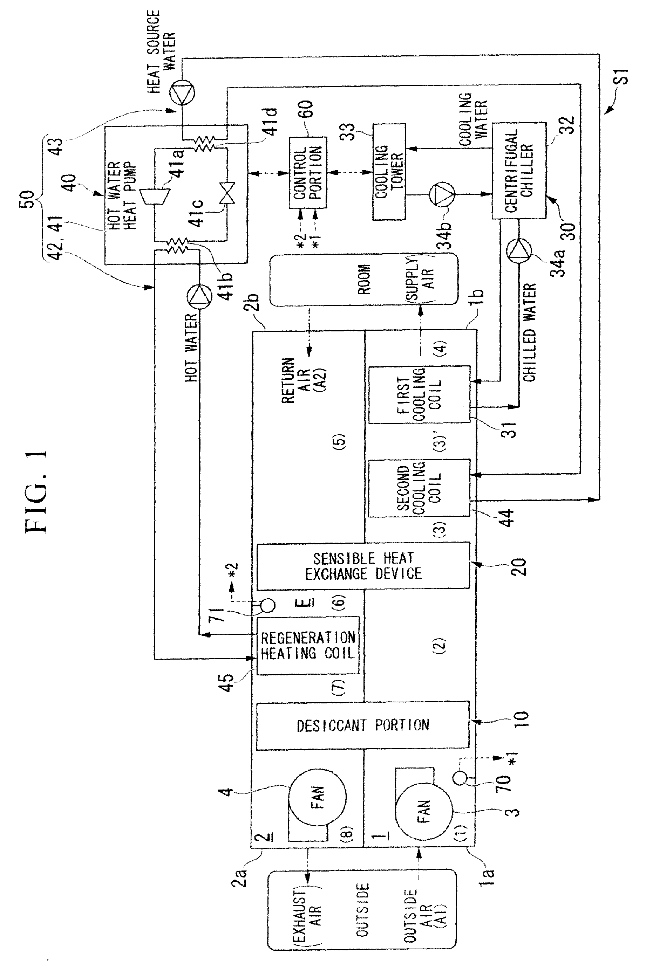

FIG. 1 is a schematic structural diagram of a desiccant air-conditioning system S1 according to a first embodiment of the present invention.
As shown in FIG. 1, the desiccant air-conditioning system S1 has; an air supply channel 1, an exhaust channel 2, a desiccant portion 10, a sensible heat exchange device (sensible heat exchange portion) 20, a refrigeration unit 30, a heat exchange unit 40, a control portion 60, and a sensor portion 70.

The air supply channel 1 supplies outside air A1 flowing from the outside to the inside of a room (an object to be air-conditioned). The outside air A1 is sucked in by the first ventilation fan 3 through an outside opening 1a, supplying the outside air A1 to the inside of the room through a room side opening 1b.

The exhaust channel 2 exhausts return air A2 flowing from the inside of the room to the outside. The return air A2 is sucked in by the second ventilation fan 4 through a room side opening 2b, exhausting the return air A2 through an outside opening 2a to the outside. The exhaust channel 2 is provided in parallel with the air supply channel 1.

The desiccant portion 10 is rotatable. It comprises a disk shaped rotor member (not shown in the figure) having a bundle of honeycomb shaped passages, and a silica gel type adsorbent or a polymer sorbent soaked into the surfaces of the honeycomb shaped passages of the rotor member. The desiccant portion 10 extends between the air supply channel 1 and the exhaust channel 2. The return air A2 and the outside air A1 pass through the honeycomb shaped passages. By rotating the rotor member, locations of the honeycomb shaped passages are alternated between the air supply channel 1 and the exhaust channel 2.
The desiccant portion 10 adsorbs the moisture contained in the outside air A1 on the surfaces of the honeycomb shaped passages as it passes through the passages in the air supply channel 1. By rotating the rotor member, the honeycomb shaped passages in which the moisture is adsorbed, are positioned in the exhaust channel 2, and the adsorbed moisture is desorbed to the return air A2 passing through the honeycomb shaped passages.

The sensible heat exchange device 20 exchanges heat between the outside air A1, which is in the air supply channel 1 and between the desiccant portion 10 and a second cooling coil 44 (described later), and the return air A2, which is in the exhaust channel 2 and between a regeneration heating coil 45 (described later) and the room.
The sensible heat exchange device 20 is rotatable. It comprises a honeycomb rotor of a form in which aluminum sheets are processed into a corrugated form, and are rolled up into a cylinder. The sensible heat exchange device 20 extends between the air supply channel 1 and the exhaust channel 2. The return air A2 and the outside air A1 pass through the honeycomb rotor. The outside air A1 passes through the sensible heat exchange device 20 after being dehumidified (after passing through the desiccant portion 10) in the air supply channel 1, absorbs heat contained in the passing outside air A1, and forms a heat storage portion in part of the sensible heat exchange device 20. Afterwards, by being rotated, the heat storage portion is positioned in the exhaust channel 2, and transfers the heat to the return air A2 passing through the heat storage portion.

The refrigeration unit 30 generally comprises: a first cooling coil (first cooling portion) 31 that absorbs heat from the outside air A1; a centrifugal chiller 32 that cools the first cooling coil 31; a cooling tower 33 releasing the heat that the first cooling coil 31 absorbed from the centrifugal chiller 32; a pump 34a that pumps chilled water between the first cooling coil 31 and the centrifugal chiller 32; and a pump 34b that pumps cooling water between the centrifugal chiller 32 and the cooling tower 33.
The refrigeration unit 30 is controlled by the control portion 60 such that the outside air A1 flowing into the first cooling coil 31 is cooled to a predetermined target supply air temperature.

The heat exchange unit 40 generally comprises: a heat supplying portion 50 which includes a hot water heat pump (heat pump) 41, a hot water circuit (high temperature heating medium circuit) 42, and a heat source water circuit (low temperature heating medium circuit) 43; the second cooling coil (second cooling portion) 44; and the regeneration heating coil (heating portion) 45.

The hot water heat pump 41 has a compressor 41a that compresses a refrigerant, a condenser 41b that cools the compressed refrigerant to condense it, an expansion valve 41c that expands the condensed refrigerant, and an evaporator 41d that evaporates the expanded refrigerant. The hot water heat pump 41 can supply chilled water (heat source water) and hot water at the same time.
The condenser 41b and the evaporator 41d are refrigerant-to-water heat exchangers, and can be general plate heat exchangers or double tube heat exchangers.

The hot water circuit 42 is connected to the regeneration heating coil 45 and the hot water heat pump 41, and circulates hot water between the regeneration heating coil 45 and the hot water heat pump 41. The hot water of the hot water circuit 42 transfers the heat received from the refrigerant to the regeneration heating coil 45 via the condenser 41b of the hot water heat pump 41.

The heat source water circuit 43 is connected to the second cooling coil 44 and the hot water heat pump 41, and circulates low temperature heat source water between the second cooling coil 44 and the hot water heat pump 41. The heat source water of the heat source water circuit 43 transfers the heat received from the second cooling coil 44 to the refrigerant via the evaporator 41d.

The second cooling coil 44 is kept at a low temperature by the heat source water circulating in the heat source water circuit 43, and absorbs heat from the outside air A1 passing through the sensible heat exchange device 20 and cools the outside air A1. In other words, the second cooling coil 44 uses the evaporator 41d of the hot water heat pump 41 as a low temperature heat source.

Heat is supplied to the regeneration heating coil 45 by hot water circulating through the hot water circuit 42. In other words, the regeneration heating coil 45 uses the condenser 41b of the hot water heat pump 41 as a high temperature heat source.

By having the configuration described above, in the heat exchange unit 40, the heat absorbed by the second cooling coil 44 from the outside air A1 is transferred to the heat source water. Then, after the heat of the heat source water, which is absorbed by the evaporator 41d of the hot water heat pump 41, is transferred to the refrigerant, the heat of the refrigerant is transferred to the hot water by the condenser 41b, and supplied to the regeneration heating coil 45.
Furthermore, the amount of heat supplied to the regeneration heating coil 45 is controlled by the control portion 60 such that it increases and decreases in proportion to the latent heat load.
"The amount of heat supplied" means the amount of heat supplied per unit mass (the same definition applies hereunder).

The sensor portion 70 detects the dry-bulb temperature and the absolute humidity of the outside air A1, and outputs them to the control portion 60.
A sensor portion 71 detects the absolute humidity of the return air A2, and outputs it to the control portion 60.

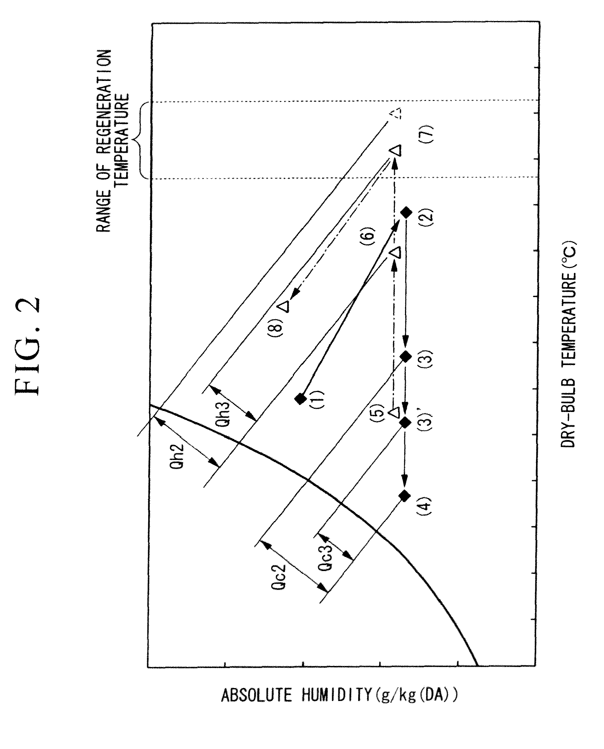

The control portion 60 controls the temperature of the return air A2 to be kept within a range of regeneration temperature (refer to FIG. 2), and increases and decreases the amount of heat supplied to the regeneration heating coil 45 in proportion to the latent heat load. In the present embodiment, the lower limit of the regeneration temperature is set to the desorption temperature of the hygroscopic material, and the upper limit is set to a temperature below that which the hot water heat pump 41 can supply (for example, 90°C). The upper limit of the regeneration temperature may be set to a temperature at which the structure of the hygroscopic material does not change.

The processing of the control portion 60 is described in more detail below. The control portion 60 calculates the difference between a preset target absolute humidity and the absolute humidity of the outside air A1 input from the sensor portion 70, as a latent heat load. Here the latent heat load processing capability (absorption and desorption capabilities) of the desiccant portion 10 is determined mainly by the following elements: the dry-bulb temperature and the absolute humidity at the inlet of the desiccant portion in the air supply channel 1, and the dry-bulb temperature and the absolute humidity at the inlet of the desiccant portion in the exhaust channel 2. The control portion 60 calculates the dry-bulb temperature at the inlet of the desiccant portion in the exhaust channel 2 corresponding to the calculated latent heat load, from the relationship between the latent heat load and each of the elements (a mathematical function between the latent heat load and each of the elements, or a table in which the latent heat load and each of the elements are associated), using in addition to the latent heat load, the dry-bulb temperature and the absolute humidity of the outside air A1 input from the sensor portion 70 (equal to the dry-bulb temperature and the absolute humidity at the inlet of the desiccant portion in the air supply channel 1), and the absolute humidity of the return air A2 at the outlet E of the sensible heat exchange device in the exhaust channel 2, which is input from the sensor portion 71 (equal to the absolute humidity at the inlet of the desiccant portion in the exhaust channel 2).
Then, it calculates the temperature of the hot water supplied to the regeneration heating coil 45, from the dry-bulb temperature of the return air A2 at the outlet E of the sensible heat exchange device in the exhaust channel 2, which is input from the sensor portion 71, and the dry-bulb temperature at the inlet of the desiccant portion in the exhaust channel 2. Then it controls the heat supplying portion 50 to adjust the temperature of the hot water supplied to the regeneration heating coil 45. In this case, the amount of heat that the second cooling coil 44 absorbs from the outside air A1 increases and decreases correlating with the change of the temperature of the hot water, in other words, the increase and decrease of the amount of heat supplied to the regeneration heating coil 45.

Next is a description of the operation of the desiccant air-conditioning system S 1 of the above-described configuration, with reference to the drawings.
First, the operation of the control portion 60 will be described.
The control portion 60 controls the amount of heat supplied to the regeneration heating coil 45 from the hot water heat pump 41 such that the temperature of the return air A2 is kept within the regeneration temperature range. At the same time, the control portion 60 increases and decreases the amount of heat supplied in proportion to the latent heat load. To be specific, by controlling the amount of heat exchanged between the hot water and the heat source water, and the temperature and the flow rate of the hot water, the control portion 60 controls the amount of heat supplied to the regeneration heating coil 45. For example, in the case where the latent heat load drops from L11 to L12, only a smaller amount of heat is required to regenerate the desiccant portion 10. Therefore the amount of heat supplied is reduced from Qh2 to Qh3 (refer to FIG. 2).

Then, the hot water heat pump 41 supplies the heat absorbed from the outside air A1 by the second cooling coil 44, to the regeneration heating coil 45 according to the heat supply amount under the control of the control portion 60 (refer to FIG. 2).
Then, the control portion 60 controls the first cooling coil 31 and lets the first cooling coil 31 to absorb heat from the outside air A1 after the second cooling coil 44 has absorbed the heat, cooling the outside air A1 to the target supply air temperature.

Next, the state of the outside air A1 and the return air A2 in the desiccant air-conditioning system S1 will be described, focusing on the flow of the outside air A1 and the return air A2.
In FIG. 1, the reference symbols (1) to (4) indicate spaces in the supply channel 1. (1) represents a space between outside opening 1a and the desiccant portion 10. (2) represents a space 1 between the desiccant portion 10 and the sensible heat exchange portion 20. (3) represents a space between the sensible heat exchange portion 20 and the second cooling coil 44. (3)' represents a space between the second cooling coil 44 and the first cooling coil 31. (4) represents a space between the first cooling coil 31 and the room side opening 1b.
In addition, the reference symbols (5) to (8) in FIG. 1 indicate spaces in the exhaust channel 2. (5) represents a space between the sensible heat exchange portion 20 and the room side opening 2b. (6) represents a space between the regeneration heating coil 45 and the sensible heat exchange portion 20. (7) represents a space between the desiccant portion 10 and the regeneration heating coil 45. (8) represents a space between the outside opening 2a and the desiccant portion 10.
FIG. 2 is a psychrometric chart showing the change of state of the air in the desiccant air-conditioning system S1.
In FIG. 2, symbols (open triangles and closed diamonds) with the reference symbols (1) to (8) represent absolute humidity and dry-bulb temperature at the spaces (1) to (8) as described above.
Firstly, as shown in FIG. 1, when the outside air A1 flowing from the outside opening 1a to the air supply channel 1 passes through the desiccant portion 10 (from the space (1) to the space (2)), the moisture of the outside air A1 is adsorbed on the surfaces of the honeycomb shaped passages, and as shown in FIG 2, the absolute humidity drops. Furthermore, the honeycomb shaped passages in the air supply channel 1 are regenerated by the return air A2 whose temperature is higher than the outside air A1 in the exhaust channel 1, so the temperature is higher than the outside air A1. As a result, in the air supply channel 1, when the outside air A1 passes through the desiccant portion 10 (honeycomb shaped passages), the dry-bulb temperature of the outside air A1 increases (from the symbol corresponding to the space (1) to (2)).
For example, by passing through the desiccant portion 10, the absolute humidity of the outside air A1 drops from 15g/kg(DA) to 9g/kg(DA), and the dry-bulb temperature increases from 29°C to 49°C.

Next, as shown in FIG. 1, when the outside air A1 passes through the sensible heat exchange device 20 (from the space (2) to the space (3)), as shown in FIG 2, the outside air A1 has its heat absorbed by the sensible heat exchange device 20 and is cooled. For example, by passing through the sensible heat exchange device 20, the dry-bulb temperature drops from 49°C to 34°C.

Next, as shown in FIG. 1, when the outside air A1 passes through the second cooling coil 44 (from the space (3) to the space (3)'), as shown in FIG. 2, the outside air A1 has its heat absorbed by the second cooling coil 44, and is cooled. That is, as described above, the outside air A1 is cooled by the amount of the absorbed heat determined according to the heat supply amount under the control of the control portion 60.
For example, by passing through the second cooling coil 44, the dry-bulb temperature drops from 34°C to 26°C.

Next, as shown in FIG. 1, when the outside air A1 passes through the first cooling coil 31 (from the space (3)' to the space (4)), as shown in FIG. 2, the outside air A1 has its heat absorbed by the first cooling coil 31, and is cooled. That is, as described above, the control portion 60 cools the outside air A1 by the first cooling coil 31, taking the outside air A1 to the set target supply air temperature.
For example, by passing through the first cooling coil 31, the dry-bulb temperature drops from 26°C to 18°C.
At this time, the amount of heat (specific enthalpy difference) that the first cooling coil 31 handles is reduced by the amount of the absorbed heat handled by the second cooling coil 44 (Qc2 → Qc3). Therefore the energy required for the centrifugal chiller 32 is reduced compared to a configuration without the second cooling coil 44.
In this way, the outside air A1 is supplied to the room after reaching to the target supply air temperature.

Next, as shown in FIG. 1, when the return air A2 that flows from the room into the exhaust channel 2 via the room side opening 2b passes through the sensible heat exchange device 20 (from the space (5) to the space (6)), as shown in FIG. 2, the return air A2 receives heat from the sensible heat exchange device 20, and is heated. For example, by passing through the sensible heat exchange device 20, the dry-bulb temperature increases from 28°C to 44°C. Due to passing through inside the room, the temperature of the return air A2 increases from the dry-bulb temperature 18°C (supply air temperature) to the dry-bulb temperature 28°C.

Next, as shown in FIG. 1, when the return air A2 passes through the regeneration heating coil 45 (from the space (6) to the space (7)), as shown in FIG. 2, the return air A2 receives heat from the regeneration heating coil 45, and is heated. For example, by the return air A2 passing through the regeneration heating coil 45, the temperature increases from the dry-bulb temperature 44°C to the dry-bulb temperature 56°C.

Next, as shown in FIG. 1, when the return air A2 passes through the desiccant portion 10 (from the space (7) to the space (8)), it absorbs moisture from the desiccant portion 10 so that the absolute humidity of the return air A2 increases as shown in FIG. 2. Furthermore, since the honeycomb shaped passages in the exhaust channel 2 had passed the outside air A1 in the air supply channel 1 with a lower temperature than the return air A2, their temperature is lower than the return air A2. As a result, when the return air A2 passes through the desiccant portion 10 (honeycomb shaped passages) in the exhaust channel 2, the dry-bulb temperature of the return air A2 drops (from the symbol corresponding to the space (7) to (8)).
For example, by passing through the desiccant portion 10, the absolute humidity of the return air A2 increases from 9g/kg(DA) to 17g/kg(DA), and the dry-bulb temperature drops from 56°C to 39°C.
Then, this return air A2 is exhausted to the outside.

As described above, according to the desiccant air-conditioning system S1, the second cooling coil 44 supplies the heat absorbed from the outside air A1, to the regeneration heating coil 45. Therefore the heat of the outside air A1 passing through the air supply channel 1 is transferred to the return air A2 that passes through the exhaust channel 2. This reduces the amount of heat (specific enthalpy difference) that is handled by the first cooling coil 31 (Qc2 → Qc3), so that it is possible to reduce the energy required for the centrifugal chiller 32, and thus enable the energy consumption to be reduced. Moreover, heat is supplied from the second cooling coil 44 to the regeneration heating coil 45. Therefore compared to a case in which a high-temperature heat source such as a boiler or the like is used, the energy required for heating can be reduced.

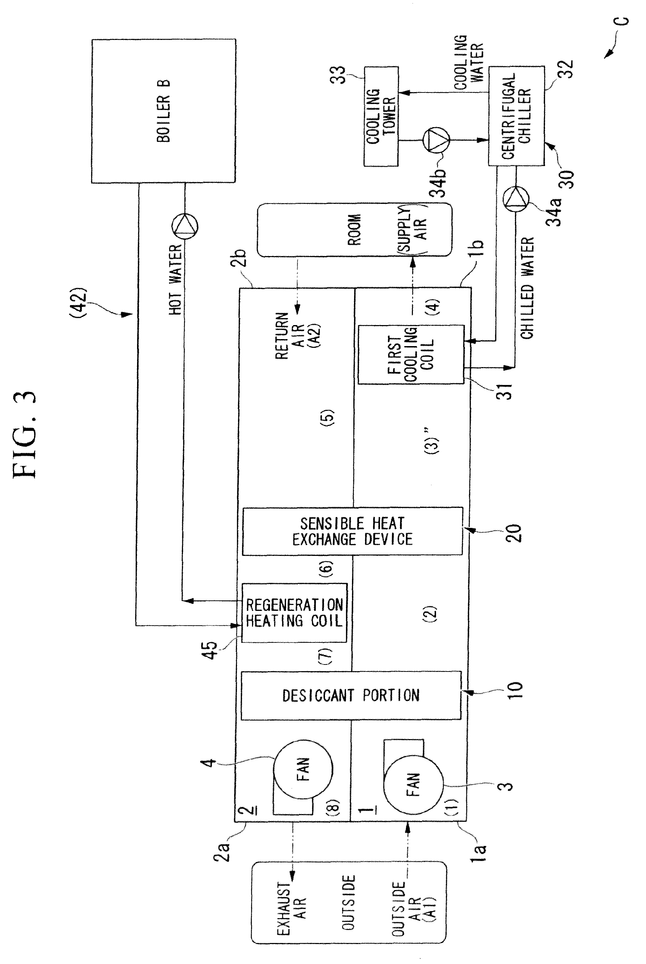

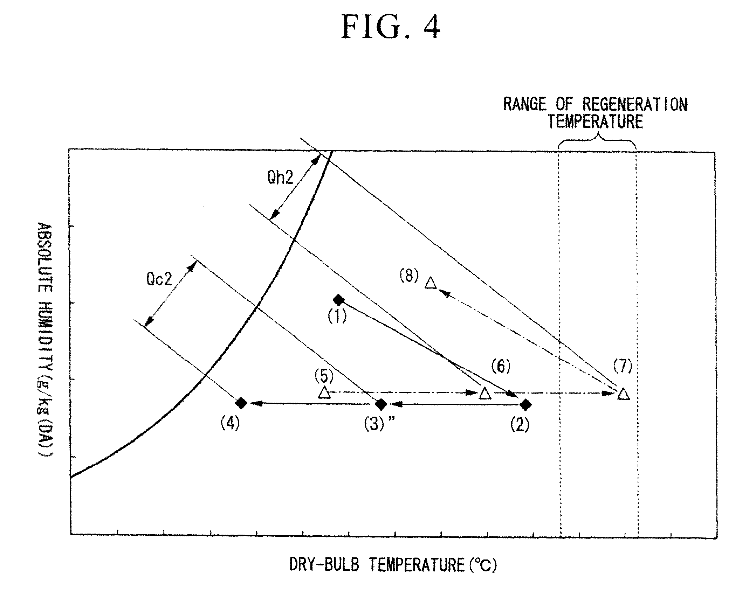

FIG. 3 shows a desiccant air-conditioning system C, being a comparative example of a desiccant air-conditioning system S1, and FIG. 4 is a psychrometric chart showing the change in state of the air in the desiccant air-conditioning system C.
The reference symbols indicating spaces in the channels are the same to symbols used in FIG. 1, except for (3)" representing the space in the supply channel 1 between the sensible heat exchange device 20 and the first cooling coil 31.
As shown in FIG. 3, the configuration of the desiccant air-conditioning system C is such that the heat supplying portion 50 is omitted from the configuration of the desiccant air-conditioning system S1, and a boiler B is provided as a heat source for the regeneration heating coil 45. In FIG 3 and FIG. 4, the same reference symbols are used for the same structural elements as in FIG. 1 and FIG. 2, and their descriptions are omitted.

As shown in FIG. 4, the desiccant air-conditioning system C cools the outside air A1 that has passed through the sensible heat exchange device 20, to the target supply air temperature (from the space (3)" to the space (4)). Therefore the amount of heat (specific enthalpy difference) Qc2 must be handled only by the refrigeration unit 30. Whereas, as shown in FIG. 2, after the outside air A1 that has passed through the sensible heat exchange device 20 has been cooled by the second cooling coil 44 (from the symbol corresponding to the space (3) to (3)'), the desiccant air-conditioning system S1 cools it to the target supply air temperature by the refrigeration unit 30 (from the symbol corresponding to the space (3)' to (4)). Therefore the amount of heat (specific enthalpy difference) handled by the refrigeration unit 30 is reduced from Qc2 to Qc3. This enables the energy required for the centrifugal chiller 32 to be reduced, so that it is possible to reduce the amount of energy consumed.
On the other hand, since the heat exchange unit 40 can transfer a large amount of heat using comparatively low power, it can reduce the energy required for heating compared to the desiccant air-conditioning system C using the boiler B.
Therefore, it is possible to reduce the energy consumption of the overall air-conditioning system.

Furthermore, a heat exchange device 20 is provided that exchanges heat between the outside air A1 and the return air A2. Therefore heat exchange is performed in advance at an earlier stage than when heat is transferred from the outside air A1 to the return air A2. Because of this, it is possible to reduce the amount of heat to be transferred in the heat exchange unit 40, reducing the energy required for the hot water heat pump 41, so that the energy consumption of the overall air-conditioning system can be further reduced.

Moreover, the amount of heat supplied to the regeneration heating coil 45 is increased and decreased in proportion to the latent heat load. Therefore it is possible to prevent the amount of heat supplied from being excessive with respect to the latent heat load, and also to reduce the energy require for the hot water heat pump 41. As a result, the energy consumption can be further reduced.
For example, when the latent heat load is reduced, the moisture that is adsorbed from the outside air A1 by the desiccant portion 10 is reduced, so that only a small amount of heat is required to regenerate the desiccant portion 10. In this case, if a fixed amount of heat Qh2 is supplied to the regeneration heating coil 45, the amount of heat supplied becomes excessive with respect to the latent heat load.
In general, most of the energy consumption of a hot water heat pump and a centrifugal chiller is the energy used for the compressor for increasing the pressure from evaporator pressure to condenser pressure. Therefore, it is important to reduce this difference (in the case of a hot water heat pump, it is the difference between the heat source water outlet temperature and the hot water outlet temperature, and in the case of a centrifugal chiller, it is the difference between the chilled water outlet temperature and the cooling water outlet temperature) in order to reduce the energy consumption.
Supposing that, in the desiccant air-conditioning system S1, the amount (hot water supply temperature) of heat supplied to the regeneration heating coil 45 became excessive relative to the latent heat load, then regardless of the margin for reducing the difference between the heat source water outlet temperature and the hot water outlet temperature in the hot water heat pump 41, the compressor 41a of the hot water heat pump 41 has to work to compensate the excessively, and thus it must consume extra energy. Similarly, if the amount (chilled water supply temperature) of heat absorbed in the first cooling coil 31 was kept constant regardless of the scale of the latent heat load, the compressor of the centrifugal chiller 32 has to work by the margin for reducing the difference between the chilled water outlet temperature and the cooling water outlet temperature of the centrifugal chiller 32, and thus extra energy is consumed.
According to the desiccant air-conditioning system S1, as shown in FIG. 2, in the case where the latent heat load is reduced, the amount of heat supplied is reduced from Qh2 to Qh3, reducing the difference between the heat source water outlet temperature and the hot water outlet temperature. Therefore it is possible to reduce the energy required for the compressor 41a of the hot water heat pump 41, so that the amount of energy consumed can be reduced.
Furthermore, the outside air A1 is cooled by the first cooling coil 31 such that it reaches the target supply air temperature. Therefore it is possible to take the outside air A1 to the target supply air temperature accurately while controlling the energy required for the centrifugal chiller 32 that cools the second cooling coil 44 appropriately according to the amount of heat supplied to the regeneration heating coil 45.

Moreover, with the configuration of the heat exchange unit 40, it is possible to make a comparatively simple system structure.

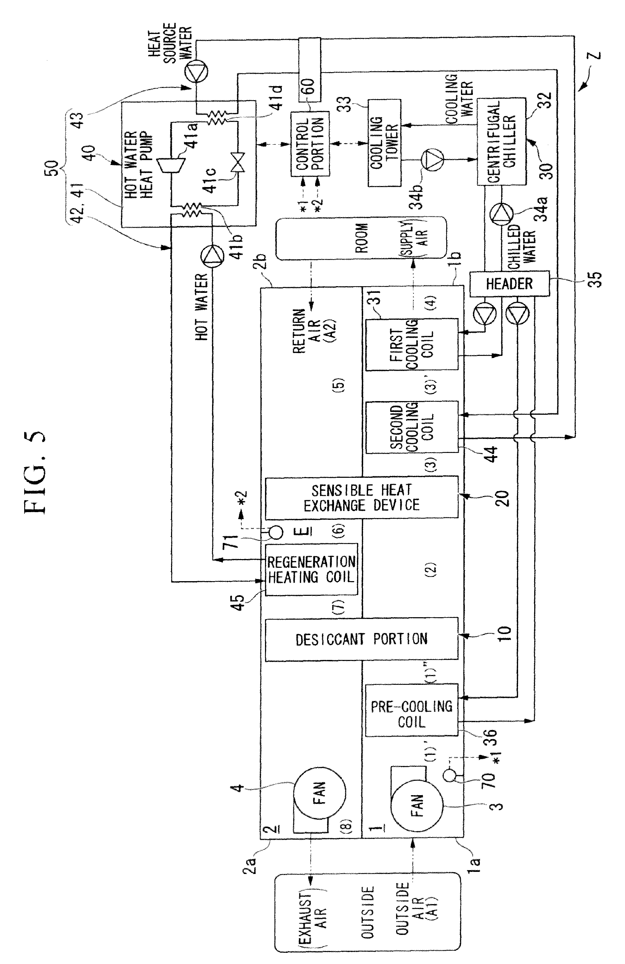

Next is a description of a desiccant air-conditioning system S2 according to a second embodiment of the present invention, with reference to FIG. 5. FIG. 5 is a schematic structural diagram of the desiccant air-conditioning system S2. The reference symbols indicating spaces in the channels in FIG. 5 are the same to symbols used in FIG. 1, except for (1)' representing the space in the supply channel 1 between the outside opening 1a and the pre-cooling coil 36, and (1)" representing the space in the supply channel 1 between the pre-cooling coil 36 and the desiccant portion 10. For other reference symbols in FIG. 5, the same reference symbols are used for the same structural elements as in FIG 1 to FIG. 4, and their descriptions are omitted.

As shown in FIG. 5, the desiccant air-conditioning system S2 comprises a pre-cooling coil (pre-cooling portion) 36 which is placed between the desiccant portion 10 and the outside in the air supply channel 1 and cools the outside air A1, and a header 35 that connects the pre-cooling coil 36 and the first cooling coil 31. The centrifugal chiller 32 can supply chilled water to the pre-cooling coil 36 and the first cooling coil 31.
In this configuration, the COP (coefficient of performance) of the centrifugal chiller 32 becomes higher than the COP of the hot water heat pump 41.

In the above-described first embodiment, the configuration is such that the adsorption and desorption of the desiccant portion 10 is controlled by the regeneration temperature. However, in the present embodiment, the pre-cooling coil 36 is placed immediately in front of the desiccant portion 10 in the air supply channel, and by controlling the outside air temperature, the adsorption and desorption of the desiccant portion 10 is controlled, and the regeneration temperature of the desiccant portion 10 is further lowered.

As described above, the ability of the desiccant portion 10 to handle the latent heat load is determined mainly by the dry-bulb temperature and the absolute humidity at the inlet of the desiccant portion in the air supply channel 1, and the dry-bulb temperature and the absolute humidity at the inlet of the desiccant portion in the exhaust channel 2. Therefore, by lowering the dry-bulb temperature at the inlet of the desiccant portion in the air supply channel 1 using the pre-cooling coil 36, it is possible to lower the dry-bulb temperature at the inlet of the desiccant portion in the exhaust channel 2.

For example, the upper threshold value of the temperature of the hot water supplied to the regeneration heating coil 45 is set differently from the technical upper threshold value (upper threshold value of the temperature that can be set technically). When the temperature of the hot water supplied to the regeneration heating coil 45, which has been obtained by the above-mentioned procedure, exceeds the set upper threshold value, the dry-bulb temperature at the inlet of the desiccant portion in the air supply channel 1, which allows to keep the temperature of the hot water supplied to the regeneration heating coil 45 to the set upper threshold value, is calculated. In other words, the amount of cooling heat required is calculated from the calculated dry-bulb temperature at the inlet of the desiccant portion in the air supply channel 1, and the dry-bulb temperature at the inlet of the outside air A1, which is input from the sensor portion 70. Then, the amount of cooling heat is supplied to the pre-cooling coil 36 from the centrifugal chiller 32.
The temperature of the outside air A1 after pre-cooling seldom goes below the supply air temperature, so the temperature of the chilled water supplied to the pre-cooling coil 36 may be the same as the temperature of the chilled water in the first cooling coil 31.

In this state, the dry-bulb temperatures (°C) and absolute humidity (g/kg) at spaces (1) to (8), which are shown in FIG. 5, are, for example: 28°C and 15g/kg at the space (1)'; 19°C and 13g/kg at the space (1)"; 41°C and 9g/kg at the space (2); 28°C and 9g/kg at the space (3); 18°C and 9g/kg at the space (4); 28°C and 9g/kg at the space (5); 38°C and 9g/kg at the space (6); 60°C and 9g/kg at the space (7); and 38°C and 16g/kg at the space (8).
Furthermore, in the pre-cooling coil 36, the temperature of the inflow chilled water is 15°C and the temperature of the outflow chilled water is 20°C, in the first cooling coil 31 the temperature of the inflow chilled water is 21°C and the temperature of the outflow chilled water is 26°C, in the second cooling coil 44 the temperature of the inflow chilled water is 15°C and the temperature of the outflow chilled water is 20°C, and in the regeneration heating coil 45 the temperature of the inflow hot water is 63°C and the temperature of the outflow hot water is 53°C.

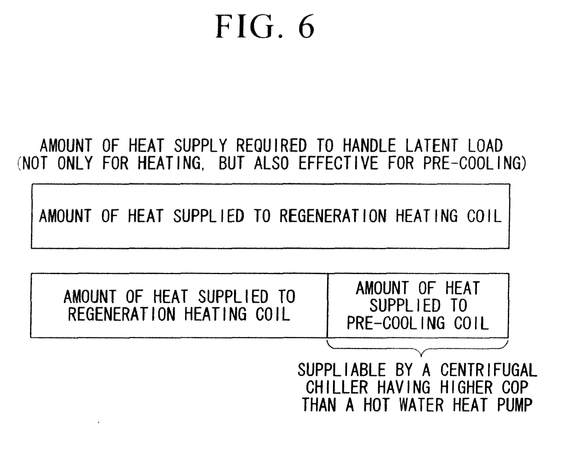

According to this configuration, it is possible to lower the temperature of the hot water supplied to the regeneration heating coil 45, reducing the energy consumption of the hot water heat pump 41, so that it is possible to improve the COP of the hot water heat pump 41. Moreover, by the amount of heat required to handle the latent heat load being distributed to the centrifugal chiller 32 with high COP, compared to the hot water heat pump 41, it is possible to further reduce the energy consumption of the overall system. In other words, as shown in FIG. 6, by supplying the amount of heat required to handle the latent heat load using not only the hot water heat pump 41, but also the centrifugal chiller 32, it is possible to reduce the energy consumption even further.

The operating procedures shown in the above-described embodiments, the various configurations, the combinations, and the like, are examples. Any change or modification is possible based on design requirements and the like provided it does not depart from the gist of the present invention.
For example, in the above-described embodiments, the sensible heat exchange device 20 is rotatable. However, having the sensible heat exchange device 20 to be static, and a channel switching system may be used as an alternative. Moreover, the sensible heat exchange device 20 may be omitted.
Furthermore, in the above-described embodiments, the desiccant portion 10 is rotatable. However, having the desiccant portion 10 to be static, and a channel switching system may be used as an alternative.
Moreover, the sensor portion 70 may be provided on the upstream side of the desiccant portion 10.

### [Description of the Reference Symbols]

- 1: Air supply channel
- 2: Exhaust channel
- 10: desiccant portion
- 20: Sensible heat exchange device (sensible heat exchange portion)
- 31: First cooling coil (first cooling portion)
- 32: Centrifugal chiller
- 35: Header
- 36: Pre-cooling coil (pre-cooling portion)
- 41: Hot water heat pump (heat pump)
- 42: Hot water circuit (higher temperature heating medium circuit)
- 43: Heat source water circuit (lower temperature heating medium circuit)
- 44: Second cooling coil (second cooling portion)
- 45: Regeneration heating coil (heating portion)
- 50: Heat supplying portion
- 60: Control portion
- A1: Outside air
- A2: Return air
- S1, S2: Desiccant air-conditioning system

## Claims

1. A desiccant air-conditioning system **characterized in that** it comprises:
an air supply channel (1) that supplies outside air (A1) that flows from the outside, to an object to be air-conditioned;
an exhaust channel (2) that exhausts return air (A2) that flows from the object to be air-conditioned, to the outside;
a desiccant portion (10) that adsorbs moisture from the outside air (A1) passing through the air supply channel (1), and that desorbs the adsorbed moisture to the return air (A2) passing through the exhaust channel (2);
a first cooling portion (31) which is installed between the desiccant portion (10) and the object to be air-conditioned in the air supply channel, and which cools the outside air (A1);
a second cooling portion (44) which is installed between the desiccant portion (10) and the first cooling portion (31) in the air supply channel (1), and which absorbs the heat from the outside air (A1) to cool it;
a heating portion (45) which is installed between the desiccant portion (10) and the object to be air-conditioned in the exhaust channel (2), and which heats the return air (A2) up to at least the regeneration temperature at which the desiccant portion (10) desorbs the moisture; and
a heat supplying portion (50) that supplies the heat absorbed from the outside air (A1) by the second cooling portion (44), to the heating portion (45).

2. A desiccant air-conditioning system according to claim 1, comprising a sensible heat exchange portion (20) that exchanges heat between the outside air (A1) in the air supply (1) channel between the desiccant portion (10) and the second cooling portion (44), and the return air (A2) in the exhaust channel (2) between the heating portion (45) and the object to be air-conditioned.

3. A desiccant air-conditioning system according to either one of claim 1 and claim 2, comprising a control portion (60) that increases and decreases the amount of heat supplied to the heating portion (45) in proportion to the latent heat load of the object to be air-conditioned.

4. A desiccant air-conditioning system according to claim 3, wherein
the second cooling portion (44) increases and decreases the amount of heat absorbed from the outside air (A1) according to the amount of heat to be supplied, and
the control portion (60) cools the outside air (A1) in the first cooling portion (31) such that the outside air (A1) to be supplied to the object to be air-conditioned reaches a target supply air temperature.

5. A desiccant air-conditioning system according to any one of claims 1 to 4, wherein
the heat supplying portion (50) further comprises:
a high-temperature heat transfer medium circuit (42), which is connected to the heating portion (45), and through which a high-temperature heat transfer medium that has a relatively high temperature circulates:
a low-temperature heat transfer medium circuit (43), which is connected to the second cooling portion (44), and through which a low-temperature heat transfer medium that has a relatively low temperature circulates; and
a heat pump (41) that moves the heat of the low-temperature heat transfer medium (43) to the high-temperature heat transfer medium (42).

6. A desiccant air-conditioning system according to according to any one of claims 1 to 5, comprising:
a pre-cooling portion (36) that cools the outside air (A1), which is installed between the desiccant portion (10) and the outside in the air supply channel (1);
a header (35) that connects the pre-cooling portion (36) and the first cooling portion (31); and
a centrifugal chiller (32) that can supply chilled water to at least one of the pre-cooling portion (36) and the first cooling portion (31).
